# EUROPEAN PATENT APPLICATION

(11) **EP 0 682 864 A1**
(43) Date of publication of application: **22.11.1995**
(21) Application number: 95201311.8
(22) Date of filing: 18.05.1995
(51) Int. Cl.: A01K 97/12

(54) **Bite indicator**

(30) Priority: 19.05.1994 NL 9400827
(71) Applicant: Knuth, Frans Adolf, NL-4141 ME Leerdam (NL)
(72) Inventor: Knuth, Frans Adolf, NL-4141 ME Leerdam (NL)
(74) Representative: Smulders, Theodorus A.H.J., Ir.

(57) **Abstract**

Bite indicator (1) suitable for use during fishing with a fishing rod (52), comprising a substantially crook-shaped pivot body (3), a fastening body (2) and a line-coupling element (4), the fastening body (2) being fixedly connectable with the ground, the pivot body (3) being connected, near one end thereof, with the fastening body (2) via a pivot element (5) and the line-coupling element (4) being connected with the pivot body (3) near the opposite end thereof, the pivot body (3) comprising a weight (20) capable of being brought into different positions. The weight (20) is connected with the pivot body (3) so as to be at least partly and preferably completely detachable, the arrangement being such that it can be removed and exchanged for another weight or can be left out.

## Description

The invention relates to a bite indicator suitable for use during fishing with a fishing rod, comprising a substantially crook-shaped pivot body, a fastening body and a line-coupling element, the fastening body being fixedly connectable with the ground, the pivot body being connected, near one end thereof, with the fastening body via a pivot element, and the line-coupling element being connected with the pivot body near the opposite end thereof, the pivot body comprising a weight capable of being brought into different positions. Such a bite indicator is known from European patent specification 0 422 913.

The known bite indicator consists of a fastening body that is fixedly connectable with the ground, for instance via a rod rest or a like ground body, a pivot body connected with the fastening body by a pivot, and a line-coupling element arranged at the end thereof remote from the pivot. The pivot body consists of a bent wire on which a weight is slidably mounted. For that purpose, the weight is provided with an axial bore through which the wire extends. Provided in the axial bore, and, if necessary, in a radial bore, is a friction material which abuts against the wire so that the weight is thereby secured against undesired sliding.

When the bite indicator is used, the moment caused by the weight relative to the pivot can be set through forced displacement of the weight along the pivot body. This means that thus the force exerted by the bite indicator on a line connected with the line-coupling element can be set within particular limits; if the weight is maximally slid in the direction of the line-coupling element, the moment is maximum, if the weight is slid to the other side, the moment becomes smaller and smaller or even negative. By virtue of the friction material, it is ideally provided that the weight does not move of its own accord when the pivot body is pivoted, as a result of which the desired setting is also maintained in the case of repeated pivot movements, while the frictional force can readily be overcome by manual power.

For fishing by means of a bite indicator the tension in the line is of great importance, because the bite indicator reacts to a change of tension or movement in the line. If the line is tightened or slackened from the setting position, a bite is assumed. The tension in the line is substantially determined by the weight provided on the line in the form of, for instance, lead and bait, the flow of the water used for fishing, the distance at which fishing takes place and the moment transmitted by the bite indicator to the line.

When the flow of water is strong, a greater moment will for instance have to be transmitted to maintain the desired tension in the line and the position of the pivot body than when the water is stagnant. This also applies to the use of more line weight. When the known bite indicator is used, this will generally mean that for a changing flow situation a different bite indicator will have to be used, because the setting possibilities of the bite indicator employed are not sufficient. This has the drawback that a large number of different bite indicators have to be purchased, taken along and used. Even if the fisher always fishes for the same fish in the same water with the same equipment, a different bite indicator will regularly have to be selected, for instance because the flow changes as a result of draining, different water levels and the like. This renders fishing with the known bite indicator costly, restless and laborious.

Therefore, the object of the invention is to provide a bite indicator of the type described in the opening paragraph wherein these drawbacks are avoided while the advantages are retained. To that end, the bite indicator according to the invention is characterized in that the weight is connected with the pivot body so as to be at least partly detachable, the arrangement being such that it can be removed and exchanged for another weight or can be left out. Preferably, the weight is entirely detachable.

Because the weight can be removed from the pivot body and replaced by another weight, the moment transmitted to the line by the bite indicator can be adjusted without restriction and without requiring selecting a different bite indicator. For adjusting a bite indicator from, for instance, a configuration for fishing in stagnant water into a configuration for fishing in very strongly flowing water, only a heavier weight needs to be fastened to the pivot body and the other way round. Hence, the fisher needs to take along only one bite indicator and a number of different weights, instead of a large number of different bite indicators.

In a preferred embodiment of the bite indicator according to the invention, the weight comprises a weight body and a securing element, the weight body having its entire length provided with a longitudinal cut whose width at least corresponds to the thickness of the pivot body, such that the pivot body can be inserted into the longitudinal cut from a side, and the securing element being approximately cylindrical and having a radially extending longitudinal cut whose width approximately corresponds to the thickness of the pivot body, one extremity of the securing element having external screw thread with which the securing element can be screwed into the weight body so as to close the cut at least partly and to rigidly connect the securing element with the pivot body.

In this embodiment, the weight body can be slightly unscrewed relative to the securing element, whereupon the weight can be slid along the pivot body and subsequently secured in a new position by tightening the securing element. Moreover, the securing element can be unscrewed further so that the longitudinal cuts are in line or the securing element is released from the weight body, whereupon the weight can be taken from the pivot body in transverse direction. This embodiment enables a simple replacement as well as a simple positioning of the weight. Moreover, the securing element provides that the weight is clamped on the pivot body, so that it can no longer move after the securing element has been screwed in, not even during a downward acceleration of the pivot body. On the other hand, after the securing element has been slightly unscrewed, the weight can readily be displaced without causing wear or damage, which is of special importance in particular in the case of repeated use.

In further elaboration of the bite indicator according to the invention, the pivot body is biased relative to the fastening body in one pivot direction, for instance through the incorporation of a springy element along the pivot element between the pivot body and the fastening body, the pivot body being pivotal between two end stops that define the extreme pivot positions.

In this embodiment, a basal moment is always exerted by the bite indicator, also when the weight has been entirely removed. This renders the bite indicator usable also when the weight is absent. Moreover, the bias in one direction prevents the pivot body from dangling at length when the line slackens, and smaller weights can be used. In general, smaller weights are cheaper and handier in use. The end stops prevent the pivot body from pivoting further than necessary, so that damages are prevented.

The invention further relates to an assembly of a fastening body, a pivot body, a line-coupling element, a pivot element and a bias means. From such an assembly a bite indicator according to the invention can be assembled in accordance with the user's wish.

The invention moreover relates to a method of using a bite indicator according to the invention, wherein the bite indicator is positioned near a rod rest, a suitable weight is selected on the basis of at least the fishing rod configuration to be used, the sort or sorts of fish to be fished for, the flow of the water and the desired line tension in a non-bite situation and in a bite situation, wherein the weight is secured to the pivot body at a suitable position and the line of a fishing rod to be inserted into the rod rest is connected with the line-coupling element, in such a manner that at least in a bite situation wherein a fish that has made a bite swims in the direction of the rod rest, the line loses at least a part of the tension and the pivot body pivots downward, while taking the line at least partly along.

To explain the invention, an exemplary embodiment of a bite indicator will hereinafter be described, with reference to the accompanying drawings. In these drawings:
Fig. 1 shows in side elevation a bite indicator according to the invention, disposed under a fishing rod;
Fig. 2 shows in perspective view a bite indicator according to Fig. 1 in assembled condition;
Fig. 3 shows in partial longitudinal section a securing element and a number of weight bodies in disassembled condition;
Fig. 4 shows an alternative embodiment of a bite indicator according to the invention; and
Fig. 5 shows a further embodiment of a bite indicator according to the invention.

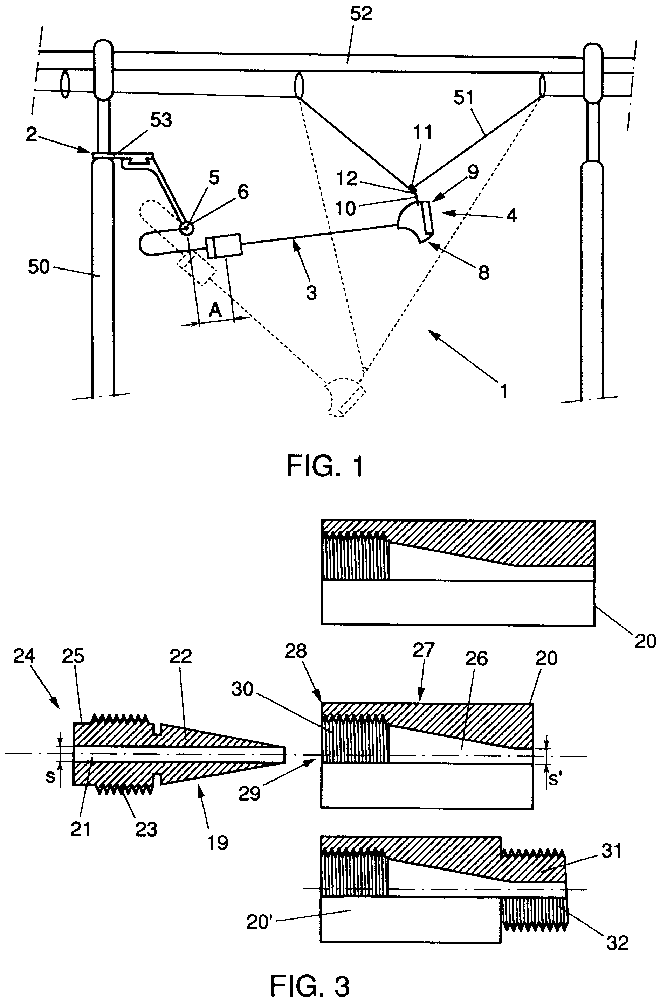

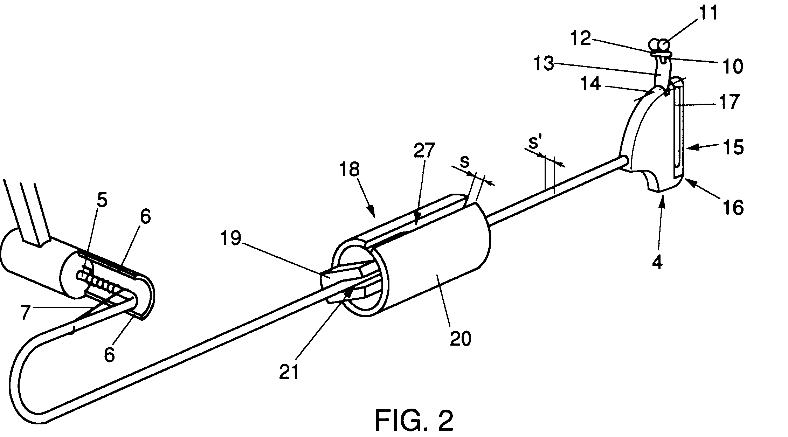

The bite indicator 1, as shown in Figs 1 and 2, consists of a fastening body 2, a pivot body 3 and a line-coupling element 4. The pivot body 3, formed from wire, is connected with the fastening body 2 via a pivot 5 and is pivotal, during use, in a vertical plane between two end stops 6 provided on the fastening body 2. Provided around the pivot 5 is a spring 7 connected on the one hand with the fastening body 2 and on the other with the pivot body 3. At the end 8 of the pivot body 3 remote from the pivot 5, the line-coupling element 4 is provided. By the spring 7, the pivot body 3 is so biased that, during use, the line-coupling element 4 is pressed downward thereby. The pivot 5 is enclosed in the fastening body 2 by means of a clamping bush 5'.

At its top side 9, the line-coupling element 4 comprises two pins 10, extending substantially at right angles to the longitudinal direction of the pivot body 3 and each having its free end provided with a spherical thickening 11. The spherical thickenings 11 abut against each other and are biased in this position by a flexible ring 12 provided around the pins 10. Hence, the thickenings 11 can only be moved apart through deformation of the ring 12. The pins 10 are mounted on a pivot plate 13 which is pivotal around an axis 14 that is located parallel to the longitudinal direction of the pivot body 3. At the front side 15 of the line-coupling element 4, a preferably closable, at least partly transparent accommodation space 16 is formed for a lighting means 17, such as for instance a chemical breaking light.

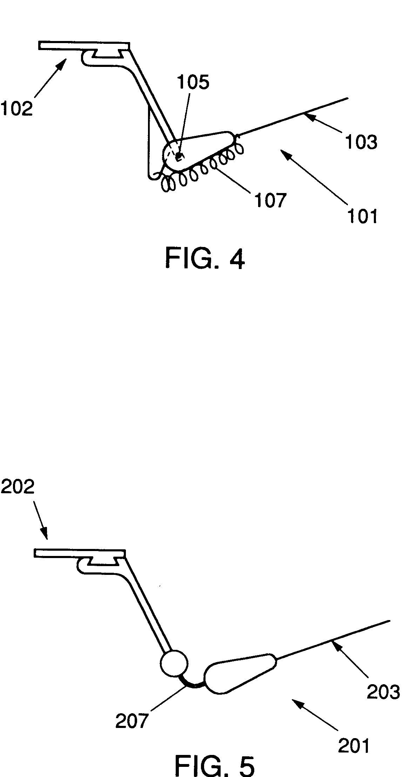

In Fig. 1, a weight 18 is provided on the pivot body at a distance A from the pivot 5. In Fig. 2, the bite indicator 1 is shown in perspective view. The weight 18 consists of a substantially cylindrical securing element 19 and a likewise cylindrical weight body 20, of which three different embodiments are drawn in Fig. 3.

The securing element 19 has its entire length provided with a radial cut 21 preferably extending beyond the longitudinal axis of the securing element 19. The cut has a width S corresponding to the width S' of the pivot body 3, permitting the securing element 19 to be slid with the cut over the pivot body 3 from a side. At a first end, the securing element comprises a slightly frustro-conical part 22. The opposite second end 24 comprises engaging means, such as for instance two flattened sides 25 by which the securing element can simply be gripped. Accommodated between the first and the second end is a cylindrical part provided with external screw thread 23.

The weight body 20 is provided with a central bore 26 having at least a diameter corresponding to the thickness S of the pivot body 3. The weight body 20 is further provided with a longitudinal cut 27 extending throughout the length and reaching into the central bore 26. The width S of the longitudinal cut 27 corresponds to the thickness of the pivot body 3. Provided at a first end 28 of the weight body 20 is an axial bore 29 having internal screw thread 30, which screw thread can cooperate with the external screw thread 23 on the securing element 19. This enables the securing element 19 to be screwed into the weight body 20. From the internal screw thread 30, the axial bore 29 in the weight body 20 tapers frustro-conically so that when the securing element 19 is being screwed into the weight body 20, the cut 21 is slightly closed.

The bite indicator according to the invention can be used as follows.

A rod rest 50 is stuck into the ground and the fastening body 2 is secured thereon with a recess 53, such that the bite indicator 1 extends approximately in a vertical plane. Preferably, the bite indicator 1 is placed without a weight 18 provided thereon. The line 51 of the fishing rod 52 is partly brought into the water with the desired line weight, not shown in the drawing, provided thereon, and the fishing rod 52 is inserted into the rod rest. The line 51 is subsequently pressed between the two spherical thickenings 11 of the line-coupling element 4, with the pivot body 3 being moved upward against the action of the spring 7 and against the force of gravity. Because no weight has been provided on the pivot body 3, the line 51 will generally abut against the fishing rod 52 so as to be substantially taut, which is not the intention. Hence, the pivot body should be weighted.

Depending on, inter alia, the flow in the fishing water and the distance at which fishing takes place, a suitable weight body 20 is selected by the fisher. Subsequently, together with the securing element 19, this weight body is slid over the pivot body, whereupon the securing element 19 is screwed slightly into the weight body. Through rotation of the cut 21 in the securing element 19 relative to the longitudinal cut 27 in the weight body 20, the weight 18 is prevented from falling from the pivot body. The weight 18 is slid along the pivot body to reach the desired position relative to the pivot 5, whereupon the securing element 19 is screwed down further. This involves the cut 21 in the securing element 19 being closed, as a result of which the securing element 19, and, accordingly, the entire weight 18 is clamped on the pivot body 3. After that, the weight 18 can no longer shift or fall from the pivot body 3.

If the desired tension in the line is not brought about by the bite indicator 1, a number of measures can be taken. The securing element 19 can be unscrewed slightly and the weight can be slid to another position, whereupon the securing element 19 is screwed down again. In this manner, in particular relatively small modifications can be made. If greater modifications are required, the weight body 20 can be replaced by a lighter or heavier weight body 20. As a matter of fact, the securing element 19 and the weight body 20 can also be interconnected prior to their being disposed on the pivot body 3. As long as the respective cuts 21, 27 are in line and the cut 21 in the securing element has not yet been closed, the weight 18 can be placed.

For fishing at a great distance (for instance 100-120 m or more) large casting weights (for instance 100 g or more) are used. To ensure a proper functioning of the bite indicator in that case, also when a bite is swimming toward the rod rest, much weight (100 g or more) should likewise be provided near the line-coupling element 4. For fishing at a smaller distance these weights should be adjusted. The bite indicator according to the invention enables this in a simple manner, rendering it also particularly suitable for fishing at different distances in stagnant or only slow-moving water.

The weight body 20' shown in Fig. 3 below is an alternative embodiment comprising a reduced end 31 having external screw thread 32 capable of cooperating with the internal screw thread 30 of another weight body 20 or 20'. This offers the possibility of coupling the weight bodies 20, 20' together, as a result of which any desired weight 18 can readily be assembled.

After the bite indicator 1 has been provided with the desired weight 18, the pivot body 3 is held approximately horizontal by the line 51. If a fish bites and subsequently swims off, the tension in the line 51 changes. If the fish swims away from the fishing rod 52, the line is further unreeled. This involves the line-coupling element 4 being moved upward in the direction of the fishing rod 52, whereby the pivot body 3 changes position and the bite situation is observed. If the fish swims in the direction of the fishing rod 52, the line 51 slackens and the line-coupling element 4 moves downward as a result of the force exerted on the line 51 by the pivot body 4, caused by the action of the spring 7 and the force of gravity. This also involves pivoting movement of the pivot body 3 and observation of the bite situation. This position is shown in Fig. 1 in broken lines.

The line 51 can be passed over a detection wheel of a bite signaller, not shown in the drawing, whereby the movements of the line 51, occurring as a result of the bite situation, are registered electronically. These movements are amplified by the pivot action of the pivot body, so that the bite situations can also be accurately observed in an electronic manner.

Fig. 4 shows an alternative embodiment of a bite indicator 101 according to the invention, with the pivot body 103 consisting of a straight bar connected at one end with a fastening body 102 via a pivot 105, and whose other end comprises a line-coupling element 104. Arranged between the fastening body 102 and the pivot body 103, along the bottom of the pivot 105, is a spring 107 which biases the pivot body 103 in downward direction during use. The bite indicator 101 can be provided with a weight in the above-described manner.

Fig. 5 shows a further embodiment of a bite indicator 201 according to the invention, with the pivot body 203 consisting of a straight bar connected at one end with a fastening body 202 via a leaf spring 207, and whose other end comprises a line-coupling element 204. During use, the leaf spring 207 biases the pivot body 203 in downward direction and forms at the same time the movable connection between the pivot body 203 and the fastening body 202. The bite indicator 201 can be provided with a weight in the above-described manner.

The invention is by no means limited to the embodiments as shown and described hereinabove. Many modifications are possible within the purview of the invention. For instance, the securing element may be provided with a cut in the frustro-conical part only and be fixedly connected with the pivot body. In this embodiment, only the weight body is exchangeable and there is no possibility of the securing element becoming lost. Further, other embodiments of line-coupling elements and fastening bodies can for instance be chosen and other detection means can be used. Moreover, the clamping securing element and the or each weight body may be connectable in another manner, for instance by means of a snap edge or snap fingers.

## Claims

1. A bite indicator suitable for use during fishing with a fishing rod, comprising a substantially crook-shaped pivot body, a fastening body and a line-coupling element, the fastening body being fixedly connectable with the ground, the pivot body being connected, near one end thereof, with the fastening body via a pivot element and the line-coupling element being connected with the pivot body near the opposite end thereof, the pivot body comprising a weight capable of being brought into different positions, characterized in that the weight is connected with the pivot body so as to be at least partly detachable, the arrangement being such that it can be removed and exchanged for another weight or can be left out.

2. A bite indicator according to claim 1, characterized in that the weight comprises a weight body and a securing element, at least the weight body being removable from the pivot body and replaceable by a weight body having a different weight.

3. A bite indicator according to claim 1 or 2, characterized in that the weight body is provided throughout its length with a longitudinal cut having a width at least corresponding to the thickness of the pivot body, the pivot body being insertable into the longitudinal cut from a side and the securing element being at least partly attachable to the weight element, the arrangement being such that after the securing element has been attached, the weight element is unslidable relative to the pivot body.

4. A bite indicator according to claim 2 or 3, characterized in that the securing element is removable from the pivot body.

5. A bite indicator according to any one of claims 2-4, characterized in that the securing element is approximately cylindrical and is provided with a radially extending longitudinal cut having a width approximately corresponding to the thickness of the pivot body, one extremity of the securing element having external screw thread with which the securing element can be screwed into the weight body so as to close the cut at least partly and to rigidly connect the securing element with the pivot body.

6. A bite indicator according to any one of claims 2-5, characterized in that a number of weight bodies can be coupled.

7. A bite indicator according to any one of the preceding claims, characterized in that the pivot body is biased in one pivot direction relative to the fastening body.

8. A bite indicator according to claim 7, characterized in that along the pivot element a springy element is incorporated between the pivot body and the fastening body.

9. A bite indicator according to claim 7 or 8, characterized in that the pivot element is a resilient element, and preferably a leaf spring.

10. A bite indicator according to any one of the preceding claims, characterized in that the pivot body is pivotal between two end stops that define the extreme pivot positions.

11. An assembly of a fastening body, a pivot body, a line-coupling element, a pivot element and a bias means, in particular suitable for use in a bite indicator according to any one of claims 7-10.

12. A method for the use of a bite indicator according to any one of the preceding claims, wherein the bite indicator is positioned near a rod rest, a suitable weight is selected on the basis of at least the fishing rod configuration to be used, the sort or sorts of fish to be fished for, the flow of the water and the desired line tension in a non-bite situation and in a bite situation, wherein the weight is secured to the pivot body at a suitable position and the line of a fishing rod to be inserted into the rod rest is connected with the line-coupling element, in such a manner that at least in a bite situation wherein a fish that has made a bite swims in the direction of the rod rest, the line loses at least a part of the tension and the pivot body pivots downward, while taking the line at least partly along.
